**Europäisches Patentamt**

**European Patent Office**

**Office européen des brevets**

(19)

(11) Numéro de publication : **0 566 441 A1**

(12) **DEMANDE DE BREVET EUROPEEN**

(21) Numéro de dépôt : **93400829.3**

(22) Date de dépôt : **31.03.93**

(51) Int. Cl.⁵ : **H04M 11/00**

(30) Priorité : **03.04.92 FR 9204104**

(43) Date de publication de la demande :
**20.10.93 Bulletin 93/42**

(84) Etats contractants désignés :
**AT BE CH DE DK ES FR GB GR IE IT LI LU MC NL PT SE**

(71) Demandeur : **EURO CP s.a.r.l.**
**1, Allée des Rochers**
**F-94000 Créteil (FR)**

(71) Demandeur : **I.M.S. FRANCE (INFORMATIONS MEDICALES & STATISTIQUES) S.a.r.l.**
**85, rue Gabriel-Peri,**
**F-92120 Montrouge (FR)**

(72) Inventeur : **Gilbert, Jérôme**
**176 rue Legendre**
**75017 Paris (FR)**

(74) Mandataire : **Keib, Gérard et al**
**Bouju Derambure (Bugnion) S.A. 38, avenue de la Grande Armée**
**F-75017 Paris (FR)**

(54) **Système, procédé et dispositif de télécollecte de données.**

(57)     Système (1) de télécollecte de données sur un ensemble de sites locaux (S1, S2, SN, SL) de collecte vers un site central (SC) comprenant des moyens centraux de contrôle et de traitement (6, 7), chaque site local (SL) comprenant des moyens locaux (D1, D2, DN, 10) pour collecter des données.

Dans chaque site local (S1, S2, SN, SL), les moyens locaux de collecte (D1, D2, DN, 10) sont agencés pour identifier et collecter des données transitant sur une ligne de télécommunication (L1, L2, LN, 9) et/ou des données issues d'au moins un équipement externe de contrôle et de traitement (P1, P2) et comprennent des moyens locaux (MR) pour stocker ces données, et le site central (SC) comprend en outre des moyens (3) pour transférer via le réseau de téléphonique (2) lesdites données stockées afin d'être traitées par les moyens centraux de contrôle et de traitement (6, 7).

Utilisation pour la collecte et le traitement de données à des fins statistiques, notamment dans le domaine de la distribution pharmaceutique.

FIG.1

EP 0 566 441 A1

La présente invention concerne un système de télécollecte de données. Elle vise également un procédé mis en oeuvre dans ce système et un dispositif de collecte associé.

La collecte de données sur des sites géographiquement dispersés,notamment des points de vente, effectuée à des fins statistiques revêt une importance économique considérable lorsqu'elle constitue par exemple un des maillons dans un processus de calcul de marges. Cette collecte doit être effectuée dans les meilleures conditions possibles de fiabilité sans pour autant générer de surcharge de travail, tout en offrant une grande souplesse de traitement au regard notamment de la nature des données à collecter et à traiter.

On connaît déjà par la demande de brevet français n° 2635626 du 18 Août 1988 au nom de IMS FRANCE un système de collecte de données statistiques. Ce système présente cependant l'inconvénient de rendre difficile une utilisation rationnelle du centre serveur du fait que ce sont les dispositifs de collecte qui ont la maîtrise des instants d'appel et que des dérives des horloges internes de ces dispositifs ont déjà été observées.

En outre,le problème de l'adaptation du système existe dès lors qu'il s'agit de prévoir l'identification de nouveaux protocoles de communication.

Le but de l'invention est de remédier à ces inconvénients en proposant un système de télécollecte de données sur un ensemble de sites locaux de collecte vers un site central comprenant des moyens centraux de contrôle et de traitement, chaque site local comprenant des moyens locaux pour collecter des données et étant relié à un réseau de télécommunication.

Suivant l'invention, dans chaque site local, les moyens locaux de collecte sont agencés pour identifier et collecter des données transitant sur une ligne de télécommunication et/ou des données issues d'au moins un équipement externe de contrôle et de traitement et comprennent des moyens locaux pour stocker ces données, et le site central comprend en outre des moyens pour transférer lesdites données stockées afin d'être traitées par les moyens centraux de contrôle et de traitement.

Ainsi, avec le système selon l'invention, les données collectées localement ne sont pas traitées localement, mais simplement stockées dans l'attente d'un transfert vers un site central où elles sont alors traitées, ce transfert étant commandé au niveau du site central. Par. conséquent, il n'est plus nécessaire de doter les moyens locaux de collecte de moyens complexes d'identification de protocole, cette identification étant reportée au niveau du site central. Ceci a pour effet de considérablement réduire les coûts induits par la prise en compte de nouveaux protocoles de transmission de données.

Suivant une forme de réalisation avantageuse de l'invention, les moyens de transfert de données sont normalement automatiques mais peuvent être contrôlés manuellement.

Selon un autre aspect de l'invention, le procédé de télécollecte de données, mis en oeuvre dans le système selon l'invention, est caractérisé en ce qu'il comprend une étape pour identifier et collecter des données transitant sur une ligne de télécommunication et/ou des données issues d'au moins un équipement externe de contrôle et de traitement suivie d'une étape pour stocker localement lesdites données, et une étape pour transférer lesdites données stockées vers le site central, l'exécution de ladite étape de transfert étant commandé au niveau du site central, suivie d'une étape de traitement desdites données transférées.

Selon encore un autre aspect de l'invention, il est proposé un dispositif pour collecter des données, mis en oeuvre dans le système selon l'invention,comprenant des moyens pour identifier et collecter des données transitant sur une ligne de télécommunication, des moyens pour saisir lesdites données et des moyens pour stocker lesdites données saisies, caractérisé en ce qu'il comprend en outre des moyens pour collecter des données issues d'au moins un équipement externe de contrôle et de traitement.

D'autres particularités et avantages de l'invention apparaîtront encore dans la description ci-après.

Aux dessins annexés donnés à titre d'exemples non limitatifs :
- la figure 1 représente une vue synoptique d'une forme de réalisation du système de télécollecte selon l'invention;
- la figure 2 est un schéma d'un forme particulière de réalisation d'un dispositif de télécollecte selon l'invention.
- la figure 3 illustre l'organisation de la gestion de fichiers dans le système selon l'invention.

On va maintenant décrire une forme préférée de réalisation du système selon l'invention en même temps que le procédé mis en oeuvre.

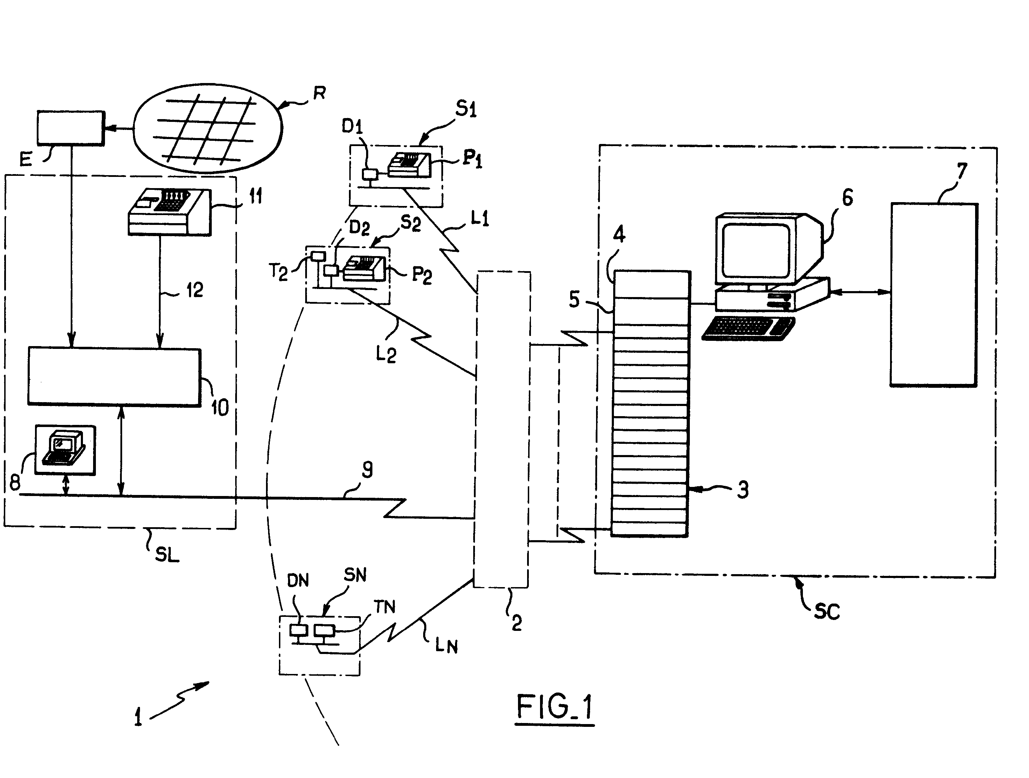

Un système de télécollecte 1 selon l'invention comprend, en référence à la figure 1, des moyens de contrôle et de traitement 3, 6, 7 au sein d'un site central SC et des dispositifs locaux de télécollecte D1, D2, DN, 10 au sein d'un ensemble de sites locaux S1, S2, SN, SL qui peuvent être par exemple des officines pharmaceutiques ou autres points de vente. Ces sites locaux S1, S2, SN, SL sont reliés au site central SC par un ensemble de lignes téléphoniques L1, L2, LN, 9 appartenant à un réseau de télécommunication, notamment un réseau téléphonique 2.

A titre d'exemple, un premier site local S1 peut être doté d'un terminal de paiement P1 relié au dispositif local de collecte D1, un second site local S2 peut être doté d'un second terminal de paiement P2 relié au second dispositif local de collecte D2 et d'un terminal de gestion T2 relié à la ligne téléphonique L2, tandis qu'un autre site local SN peut n'être doté que d'un terminal de gestion TN relié à la ligne téléphonique LN. Dans le cas de l'application du système selon l'invention à la collecte d'informations statistiques relatives à la gestion des approvisionnements des officines pharmaceutiques, un site local SL est généralement doté d'un terminal 8 destiné à la gestion des commandes à différents répartiteurs et d'un terminal de paiement 11 qui peut être relié au dispositif local de collecte 10 par une liaison de type Centronics généralement utilisée pour la connexion d'une imprimante. D'autres types de liaison peuvent être également envisagées, en mode parallèle ou série, par exemple une liaison RS 232 C.

On peut également prévoir des dispositifs de collecte agencés pour recevoir des données observées sur un second réseau, par exemple un réseau de distribution électrique sur lequel transitent des informations par courants porteurs, comme le suggère la figure 1 dans laquelle le dispositif de collecte 10 est également relié à un équipement externe E d'observation d'informations transitant sur un réseau de distribution d'énergie électrique R. Bien entendu, le second réseau peut reposer sur l'utilisation d'autres supports de transmission, par exemple les infrarouges, la radio ou des moyens filaires

Le dispositif local de collecte 10 et le terminal de gestion 8 sont reliés à la ligne téléphonique 9 du site local SL. Un site central de télécollecte SC selon l'invention comprend, en référence à la figure 1, une unité d'alimentation électrique 4, un multiplexeur 5, au sein d'un dispositif frontal de communication 3 contenant un ensemble de cartes de modulation/démodulation (modem), par exemple au nombre de 16, associées chacune à une ligne de télécommunication, et une unité de contrôle et de traitement 6, par exemple un microordinateur de type PC, reliée généralement à un système informatique central 7. Cette unité de contrôle et de traitement 6 est prévue pour permettre les fonctions suivantes :
- la gestion des relations entre un opérateur et le système, notamment sous la forme de présentations en fenêtres et menus déroulants,
- le démultiplexage des données collectées,
- le traitement de ces données notamment afin de les ranger dans des fichiers de format prédéterminé,
- la production de fichiers associés aux opérations de télécommunication,
- la gestion de fonctions d'exploitation du système de télécollecte, notamment :
    . la configuration de ce système,
    . la télémaintenance des dispositifs de collecte,
    . la préparation de listes d'appel associant à chaque numéro d'appel différents paramètres de fonctionnement et des champs d'information nécessaires à l'exploitation du système.

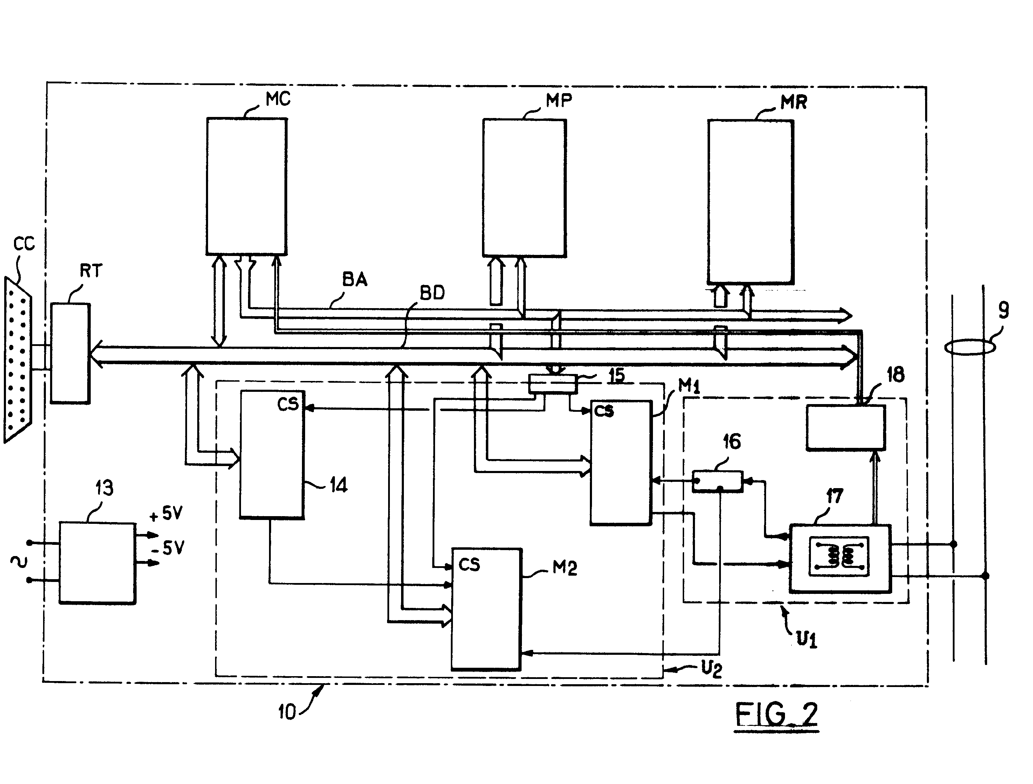

Les lignes téléphoniques utilisées par le système de télécollecte selon l'invention peuvent appartenir à un réseau téléphonique commuté privé et/ou public et exploiter indifféremment les modes de numérotation décimale ou à fréquences vocales. Chaque dispositif local de collecte 10 comprend, en référence à la figure 2, une unité de contrôle et de traitement, par exemple un microcontrôleur MC, une mémoire permanente, de type PROM, EPROM, Flash EPROM ou EEPROM, contenant le programme exécuté par le microcontrôleur MC, une mémoire de stockage des données collectées MR, par exemple de type RAM sauvegardée, EEPROM, Flash EPROM ou disque dur, et des circuits de communication. Ces circuits de communication comprennent un premier ensemble U1 d'interface avec la ligne téléphonique 9 comprenant des moyens de détection de sonnerie 18 et de prise de ligne 17 et des moyens de commutation 16, un ensemble de communication U2 contenant par exemple deux circuits de modulation/démodulation (modem) M1, M2 et un circuit de sérialisation/désérialisation (UART) 14 associés à ces circuits de modulation/démodulation M1, M2. Les circuits précités sont tous reliés à un bus de données BD auquel sont bien sûr interfacés le microcontrôleur MC et les mémoires MP et MR. Un bus d'adresse BA commandé en entrée par le microcontrôleur MC est relié au moins partiellement aux circuits de mémoire MP, MR et à un décodeur d'adresse 15 qui fournit notamment des signaux de sélection de boitier CS aux différents circuits de communication. Le dispositif de collecte est également équipé d'une unité d'alimentation 13 assurant une fourniture appropriée d'énergie électrique aux différents circuits du dispositif et d'un connecteur CC permettant une connexion externe au bus de données BD à travers un registre tampon RT.

Il est à noter que les moyens de prise de ligne 17 peuvent avantageusement ne comprendre qu'un seul transformateur standard de couplage de ligne téléphonique qui peut tour à tour être utilisé en mode d'observation d'échanges sur la ligne téléphonique en présentant dans ce cas une impédance élevée à la ligne téléphonique pour ne pas perturber les conditions d'exploitation de cette ligne, et en coupleur de ligne standard pour les opérations d'échange de données avec le site central en présentant à la ligne une impédance basse conformément aux recommandations en vigueur. La polyvalence de ce transformateur, vu du primaire, est rendue possible par une modification de la charge appliquée au secondaire dudit transformateur.

Dans la forme de réalisation du dispositif de collecte intégrant deux circuits de modulation/démodulation, un premier modem est prévu pour traiter une première bande prédéterminée de communication, le second cir-

EP 0 566 441 A1

cuit de modulation/démodulation étant dédié à une seconde bande de communication, cette configuration permettant de prendre en compte plusieurs protocoles de communication et d'effectuer des observations sur deux canaux simultanément. Mais on peut bien sûr prévoir un dispositif de collecte ne comprenant qu'un seul circuit de modulation/démodulation lorsqu'il n'est pas nécessaire d'effectuer des observations sur deux canaux simultanément.

Le dispositif local de collecte est agencé pour effectuer, dans le cas d'une opération de collecte de données sur une ligne de télécommunication, une détection de porteuse à des fréquences prédéterminées, par exemple 2100 Hz pour l'observation d'échanges selon les avis V21 et/ou V23 du CCITT, et pour stocker les données observées sur cette ligne.

Il est à noter que les programmes de gestion du dispositif de collecte peuvent être téléchargés depuis le site central via les moyens du système de collecte selon l'invention.

L'exploitation du système de télécollecte selon l'invention fait appel à une base de données qui permet de produire ou d'importer des fichiers en format ASCII. On peut bien sûr prévoir des programmes de conversion utilisés pour permettre le traitement de données dans le cadre d'une base de données n'intégrant pas directement des données au format ASCII.

Le transfert via le réseau téléphonique commuté des données préalablement collectées et stockées vers le site central de traitement est effectué sur appel de celui-ci et selon des modes classiques de transfert de fichiers.

Aucun traitement de données n'est effectué au sein des dispositifs de collecte, l'ensemble des traitements étant opéré au niveau du centre de télécollecte. En particulier,les données collectées ne sont pas filtrées au sein des dispositifs de collecte.

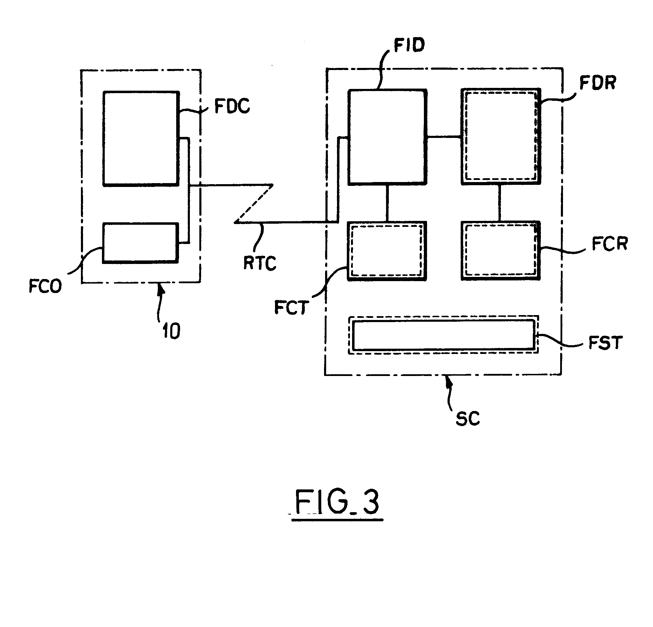

En référence à la figure 3, le système de télécollecte selon l'invention met en oeuvre un ensemble de fichiers stockés dans les dispositifs locaux de collecte et dans le site central SC. Chaque mémoire locale contient un fichier FDC des données collectées et un fichier FCO de configuration du dispositif local de collecte 10. Au sein du poste de travail informatique 6 du site central SC, le système de collecte selon l'invention gère un fichier FID gui est l'image des données collectées au niveau de chaque dispositif local de collecte, un ensemble de fichiers destiné au système informatique de l'opérateur comprenant un fichier FDR des données retraités, un fichier FCT de compte-rendu des opérations de télécommunication et un fichier FCR de compte-rendu de retraitement des données, et un fichier FST de session de télécollecte fourni par le système informatique de l'opérateur.

Les paramètres de fonctionnement du dispositif de collecte sont stockés de manière non volatile et peuvent être à tout moment modifiés depuis le site central de traitement. Ces paramètres, qui sont traités sous la forme d'un ou plusieurs mots d'état qui peuvent être automatiquement lus ou chargés lors d'un transfert comprennent par exemple :

- le nombre de coups de sonnerie avant prise de ligne,
- une indication de l'instant (heures, minutes) auquel on commute de l'attente longue à l'attente courte,
- une indication de l'instant (heures, minutes) auquel on commute de l'attente courte à l'attente longue,
- la source des données collectées : ligne téléphonique seule, entrée parallèle, ou ensemble ligne téléphonique-entrée parallèle.

Avec le procédé selon l'invention, les paramètres précités régissant le fonctionnement des dispositifs de collecte sont modifiables à distance depuis le site central. On peut avantageusement prévoir un champ représentatif d'un profil de fonctionnement pouvant par exemple prendre une valeur numérique comprise entre 1 et 99. A chaque valeur du profil de fonctionnement est associé un écran présentant de manière explicite des choix fonctionnels retenus parmi les choix possibles. Un écran principal agencé comme panneau de contrôle offre une vue synthétique de la liste d'appel. L'exploitant du site central peut ainsi effectuer des opérations d'édition,de modification et de sauvegarde des paramètres associés à un profil de fonctionnement par sélection du champ "Profil de fonctionnement" associé à chaque numéro de téléphone.

En cas de saturation de la mémoire de stockage du dispositif de collecte, un indicateur est émis par le microcontrôleur à l'occasion du prochain transfert de données, pour alerter le site central de cette saturation.

A l'issue de chaque télécollecte réussie, le site central émet à destination du dispositif de collecte concerné la date et l'heure courantes. La réception de la date et de l'heure de la dernière télécollecte réussie provoque d'une part son stockage dans la mémoire non volatile du dispositif ainsi que la remise à zéro de compteurs de jour et d'heure permettant d'horodater des évènements en temps relatif par rapport au moment de la dernière télécollecte réussie, d'autre part la remise à 'heure de l'horloge temps réel qui dans le dispositif permet d'horodater des évènements en temps absolu. Lors de la production des fichiers de données, le logiciel de post-traitement installé sur le site central effectue les corrections nécessaires pour que les jours exprimés en quantième soient correspondant aux journées de travail des pharmacies.

On peut également prévoir que, lorsque la fonction de variation du nombre de coup de sonnerie avant prise de ligne en fonction de l'heure courante est activée, si l'heure n'est pas validée, c'est l'attente courte qui est sélectionnée. Ce cas correspond à une réinitialisation du dispositif et une remise à l'heure télécommandée depuis le site central. De même, lorsque la fonction de variation du nombre de coups de sonnerie avant prise de ligne en fonction de la présence ou non de données stockées depuis la dernière télécollecte, la réinitialisation du microcontrôleur du dispositif de collecte ne perturbe pas cette fonction.Lorsque les deux fonctions précédentes sont sélectionnées, le comportement du dispositif de collecte vis à vis du temps de prise de ligne correspond au tableau suivant :

| HEURE | JOUR attente court | NUIT attente longue |
|---|---|---|
| Données en mémoire | | |
| Présence | attente courte | attente longue |
| Absence | attente longue | attente longue |

Ce paramétrage du dispositif de collecte en réponse à un appel présente l'avantage de contribuer à une réduction des coûts de télécommunication, puisque les moyens de contrôle et de traitement peuvent alors être programmés pour interpréter une attente longue de nuit comme l'indication par le dispositif de collecte de l'absence de données en son sein.

En outre, un tel paramétrage permet que la ligne téléphonique à laquelle est relié le dispositif de collecte puisse être utilisée normalement à d'autres fins (conversations, interrogation de bases de données, interrogations de fichiers de cartes de crédit), le procédé de télécollecte n'étant pas alors prioritaire en journée devant les autres modes d'utilisation de la ligne téléphonique.

Bien sûr, la présente invention n'est pas limitée aux exemples qui viennent d'être décrits et de nombreux aménagements peuvent être apportés à ces exemples sans sortir du cadre de l'invention.

Ainsi, on peut prévoir une version monovoie du système et du procédé selon l'invention. En outre, les caractéristiques des composants constituant les dispositifs de collecte ne sont pas limitées à celles énoncées dans la description et peuvent suivre les progrès attendus dans ce secteur. De même, le système selon l'invention peut prendre en compte tous types de protocoles de communication sans sortir du cadre de l'invention. On peut également prévoir que le dispositifs de collecte selon l'invention collectent des données issues d'équipements externes d'observation et de saisie sur tout type de réseau ou de support sur lequel des informations peuvent transiter, notamment un réseau de distribution d'énergie électrique ou des réseaux utilisant d'autres supports de transmission, par exemple, les infrarouges, la radio ou des moyens filaires. En outre, le réseau téléphonique commuté dont l'accès est aujourd'hui principalement analogique peut évoluer vers des solutions numériques du type RNIS sans remettre en cause le système selon l'invention.

**Revendications**

1. Système (1) de télécollecte de données sur un ensemble de sites locaux (S1,S2,SN,SL) de collecte vers un site central (SC) comprenant des moyens centraux de contrôle et de traitement (6,7), chaque site local (SL) comprenant des moyens locaux (D1, D2, DN, 10) pour collecter des données, caractérisé en ce que dans chaque site local (S1, S2, SN, SL), les moyens locaux de collecte (D1, D2, DN, 10) sont agencés pour identifier et collecter des données transitant sur une ligne de télécommunication (L1, L2, LN, 9) et/ou des données issues d'au moins un équipement externe de contrôle et de traitement (P1, P2) et comprennent des moyens locaux (MR) pour stocker ces données, et en ce que le site central (SC) comprend en outre des moyens (3) pour transférer via le réseau de téléphonique (2) lesdites données stockées afin d'être traitées par les moyens centraux de contrôle et de traitement (6, 7).

2. Système selon la revendication 1, caractérisé en ce que lesdits moyens de transfert sont normalement automatiques mais peuvent être contrôlés manuellement.

3. Système (1) selon l'une des revendications 1 ou 2, caractérisé en ce que le site central comprend, au titre desdits moyens de transfert, des moyens de multiplexage (5) reliés d'une part à un ensemble de moyens de modulation/démodulation (modems) raccordés à des lignes téléphoniques appartenant au réseau téléphonique (2) et d'autre part aux moyens centraux de contrôle et de traitement (6, 7).

4. Système (1) selon la revendication 3, caractérisé en ce que les moyens centraux de contrôle et de traitement (6, 7) comprennent un premier poste de travail informatique (6) relié d'une part aux moyens de multiplexage (5) et d'autre part à un système informatique central (7).

5. Système (1) selon l'une des revendications précédentes, caractérisé en ce que des sites locaux (S2, SN, SL) sont équipés, au titre desdits équipements externes de contrôle et de traitement, de terminaux de gestion (T2, TN, 8) reliés respectivement aux lignes téléphoniques (L2, LN, 9) équipant chacun desdits sites, et en ce que les moyens locaux de collecte (D2, DN, 10) sont agencés pour identifier toute transmission de données entre ces terminaux de gestion (T2 ,TN, 8) et des centres de gestion à distance via lesdites lignes téléphoniques respectives (L2, LN, 9).

6. Système (1) selon l'une des revendications précédentes, caractérisé en ce que des sites locaux (S1, S2, SL) sont équipés de terminaux de paiement et/ou d'enregistrement (P1, P2, 11) reliés auxdits moyens locaux de collecte (D1, D2, 10) via des premiers moyens de liaison (12).

7. Système selon l'une des revendications précédentes, caractérisé en ce que dans au moins un site local (SL), les moyens locaux de collecte (10) sont agencés pour collecter des données issues de moyens externes (E) pour observer et saisir des données ou informations transitant sur un second réseau (R), notamment un réseau de distribution d'énergie électrique, des réseaux utilisant comme support de transmission les infrarouges, la radio ou des moyens filaires, lesdits moyens externes d'observation et de saisie (E) étant reliés aux moyens locaux de collecte par des seconds moyens de liaison.

8. Système (1) selon l'une des revendications 6 ou 7, caractérisé en ce que certains desdits moyens de liaison sont de type parallèle, notamment de type CENTRONICS.

9. Système selon l'une des revendications 6 à 8, caractérisé en ce que certains desdits moyens de liaison sont de type série.

10. Procédé de télécollecte mis en oeuvre dans le système selon l'une des revendications précédentes, caractérisé en ce qu'il comprend, au niveau de chaque site local (S1, S2, SN, SL), une étape pour identifier et collecter des données transitant sur une ligne de télécommunication (L1, L2, LN, 9) et/ou des données issues d'au moins un équipement externe de contrôle et de traitement (P1, P2, 11, E) suivie d'une étape pour stocker localement lesdites données, et au niveau du site central (SC), une étape pour transférer lesdites données stockées vers le site central (SC), suivie d'une étape de traitement desdites données transférées, l'exécution de ladite étape de transfert étant commandée au niveau dudit site central (SC).

11. Procédé selon la revendication 10, caractérisé en ce qu'il comprend en outre, au niveau du site central (SC) une étape de configuration sélective des moyens locaux de collecte (D1, D2, DN, 10) comprenant un transfert d'un ensemble de paramètres de fonctionnement vers lesdites moyens locaux de collecte (D1, D2, DN, 10).

12. Procédé selon la revendication 11, caractérisé en ce que l'étape de configuration sélective comprend une configuration de temps d'attente observés avant toute prise de ligne par lesdits moyens locaux de collecte.

13. Procédé selon la revendication 12, caractérisé en ce que l'étape de configuration sélective comprend en outre une programmation d'une attente longue avant prise de ligne en cas d'absence de donnée stockée dans lesdits moyens locaux de collecte, et en ce qu'il comprend en outre, au niveau du site central (SC),une étape pour identifier une attente longue et pour renoncer, en cas d'identification d'attente longue, à toute étape de transfert de données.

14. Procédé selon l'une des revendications 10 à 13, caractérisé en ce qu'il comprend en outre, au niveau du site central (SC), une étape de téléchargement à destination de tout ou partie desdits moyens locaux de collecte (D1, D2, DN, 10), de programmes de gestion desdits moyens locaux de collecte.

15. Dispositif de collecte (D1, D2, DN, 10) mis en oeuvre dans le système selon l'une des revendications 1 à 9 avec le procédé selon l'une des revendications 10 à 14, comprenant des moyens pour observer la présence de données transitant sur une ligne de télécommunication, des moyens de prise de lignes (17), des moyens pour saisir lesdites données observées et des moyens (MR) pour stocker lesdites données saisies, caractérisé en ce qu'il comprend en outre des moyens pour collecter des données issues d'au moins un équipement externe (P1, P2, 11), notamment un terminal de paiement et/ou d'enregistrement.

**16.** Dispositif (10) selon la revendication 15, caractérisé en ce qu'il est agencé pour collecter en outre des données ou informations issues de moyens externes (E) pour observer et saisir des données ou informations transitant sur un second réseau, notamment un réseau de distribution d'énergie (R), des réseaux utilisant comme support de transmission les infrarouges, la radio ou des moyens filaires.

**17.** Dispositif (10) selon l'une des revendications 15 ou 16, caractérisé en ce qu'il comprend en outre des moyens de contrôle et de traitement (MC) associés à une mémoire de programme (MP) et agencés pour gérer une collecte sélective de données soit issues dudit équipement externe (P1, P2, 11), soit observées et saisies sur la ligne de télécommunication (9) à laquelle est connecté ledit dispositif de collecte (10).

**18.** Dispositif (10) selon l'une des revendications 15 à 17, caractérisé en ce que les moyens de prise de ligne (17) comprennent un seul transformateur de couplage de ligne téléphonique pouvant être utilisé tour à tour en mode d'observation d'échanges sur ladite ligne téléphonique (9) et en coupleur de ligne pour des opérations d'échanges de données avec le site centrai (SC).

**19.** Application du système, du procédé et de dispositifs de collecte selon l'une des revendications précédentes à la collecte d'informations statistiques relatives à un ensemble de points de vente géographiquement dispersés.

**20.** Application du système, du procédé et de dispositifs de collecte selon l'une des revendications précédentes à la collecte d'informations statistiques relatives à la gestion des approvisionnements d'officines pharmaceutiques.

**21.** Application du système, du procédé et de dispositifs de collecte selon l'une des revendications précédentes à la collecte de données transitant sur au moins un second réseau (R), notamment un réseau de distribution d'énergie électrique.

FIG_1

EP 0 566 441 A1

FIG. 2

EP 0 566 441 A1

FID

FDR

FDC

FCO

RTC

10

FCT

FCR

FST

SC

## FIG_3

**Office européen des brevets**

# RAPPORT DE RECHERCHE EUROPEENNE

Numero de la demande

EP    93 40 0829

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4 232 295 (G.B.MCCONNELL)<br>* colonne 2, ligne 49 - colonne 3, ligne 25 *<br>* colonne 4, ligne 17 - ligne 56 * | 1-3,10 | H04M11/00 |
| Y |  | 1-4 | |
| Y | WO-A-8 901 959 (TELEMETRY RESEARCH II, INC)<br>* page 14, ligne 8 - page 16, ligne 5 *<br>* page 27, ligne 22 - page 29, ligne 15 *<br>* page 35, ligne 12 - page 36, ligne 17 *<br>* figure 2 * | 1-3, 10-13 | |
| Y | US-A-4 577 063 (B.E.HANSCOM ET AL)<br><br>* abrégé * | 1-3, 10-13 | |
| Y | EP-A-0 264 311 (ELF FRANCE)<br>* colonne 5, ligne 45 - colonne 6, ligne 16 *<br>* figure 1 * | 1-4 | |
| A | EP-A-0 176 072 (OMRON TATEISI ELECTRONICS)<br><br>* page 5, ligne 18 - page 8, ligne 6 *<br>* figure 1 *<br>* revendication 1 * | 1-6,15, 19 | **DOMAINES TECHNIQUES RECHERCHES (Int. Cl.5 )**<br><br>H04M |

Le présent rapport a été établi pour toutes les revendications

| Lieu de la recherche | Date d'achèvement de la recherche | Examinateur |
|---|---|---|
| LA HAYE | 11 AOUT 1993 | CANOSA ARESTE C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)